# EUROPEAN PATENT APPLICATION

(11) **EP 4 545 289 A1**
(43) Date of publication of application: **30.04.2025**
(21) Application number: 23205702.6
(22) Date of filing: 25.10.2023
(51) Int. Cl.: B32B 7/023, B32B 17/10

(54) **METHOD FOR PRODUCING INTERLAYER FILMS FOR WINDSHIELDS WITH CURVED OBSCURATION BANDS**

(71) Applicant: Kuraray Europe GmbH, 65795 Hattersheim am Main (DE)
(72) Inventor: Keller, Uwe, 77210 Avon (FR)
(74) Representative: Janßen, Christian Oliver

(57) **Abstract**

The invention is directed to a process to manufacture an interlayer film wherein the interlayer film comprises at least one layer L1 comprising a first polyvinyl acetal resin and less than 15 wght% of a first plasticizer and at least one layer L2 comprising a mixture of a second polyvinyl acetal resin and more than 16 wght% of a second plasticizer **characterized in that** layer L1 is curved by asymmetric stretching and layer L1 and L2 are combined into the interlayer film and wherein Layer L1 has different optical properties than layer L2.

## Description

The present invention relates to a method to produce interlayer films for windshields with curved obscuration bands i.e. with areas having reduced optical transparency.

Most windshields for cars are assembled from two glass sheets combined by an interlayer which is usually made from plasticized polyvinyl butyral (PVB). It is long known to provide the windscreens with a so called shade band i.e. with an area at the roof edge of the windscreen having reduced optical transparency to protect the driver from sun light. Such shade bands are usually generated by dying a part of the interlayer film. Downside of this established technology is that producing the partly dyed interlayer film requires a special co-extrusion die. Especially wider than usual shade bands can require hefty investment into very specialized equipment.

For a different application, WO 2019/121535 or EP3831594A1 proposes interlayer films with obscuration areas printed onto a plasticizer-free thin film of PVB which are cut into shape and used together with a standard PVB interlayer. However, due to dimensional limitation of printing lines to a little more than 1 m in width and less than 1 m as a repeat length, it is impossible to directly print the final geometry of an obscuration band with enough width to span a windshield from left to right, particularly at its basis along the bottom. However, due to the curved shape of most windscreens, simple rectangular versions of printed obscuration areas, which would be accessible by an endlessly printed band cannot be applied to standard curved windscreen interlayer films.

It was therefore objection of the invention to provide interlayer films for windshields with obscuration bands with a curved shape. Surprisingly, it was found that plasticizer-free thin film of PVB can be stretched into curved shape of a windscreen and then applied to a standard plasticizer-containing film of PVB.

Accordingly, object of the invention is a process to manufacture an interlayer film wherein the interlayer film comprises at least one layer L1 comprising a first polyvinyl acetal resin and less than 15 wght% of a first plasticizer and at least one layer L2 comprising a mixture of a second polyvinyl acetal resin and more than 16 wght% of a second plasticizer **characterized in that** layer L1 is curved by asymmetric stretching and layer L1 and L2 are combined into the interlayer film and wherein Layer L1 has different optical properties than layer L2.

With the method of the invention, not only interlayer films providing windshields or rear windows with a shade band can be produced. It is further possible to provide windshields with a black or tinted background as projection area for "Head-up displays" (HUD), especially so called "panoramic HUDs" or "scenic HUDs".

In the process according to the invention layer L1 may be provided at least in part with different optical properties than layer L2, wherein the optical properties are selected from the group consisting of optical density, visible light transmission, UV transmission, NIR transmission, color values, visual color impression and surface gloss.

Especially the terms "different optical properties " refers to a lower or reduced transparency of L1 compared with L2. Preferable, L1 has a light transmission in the visible spectrum less than L2, for example less than 90%, 80%, 50%, 25%, or 10%, as measured for the combined stack of L1 and a clear PVB in 0.76 mm thickness laminated between 2 x 2.1 mm clear soda lime glass according to ISO 9050.

In a variant, the area with different optical properties like reduced transparency may fade out towards transparency. In such variants, at least a part of the area with reduced transparency has a lower transmission in the visible spectrum as defined above. For example, such area can have a pattern such as a dotted matrix like usually encountered along the perimeter of windshields, defined line graphics, inscriptions, or any other type of graphics instead of a homogeneous reduced transparency.

While in theory, L1 may have the same size and shape as L2, it is preferred that L1 has the same width but a smaller height as L2 (wherein width and height are defined by the size of a typical windscreen). Preferable, height of L1 in the final stretched shape is 70 to 5 % and preferably 50 to 10 % of the total height of L2 in vertical direction of the windshield or glazing part.

Layer L1 may be provided with different optical properties like lower transparency or reduced transparency i.e. different optical properties than L2 by adding organic dyes, pigments, UV absorbers, NIR absorbers.

Further, Layer L1 may be provided with different optical properties like lower transparency or reduced transparency i.e. different optical properties than L2 by embossing, printing, hot stamping or coating of at least one surface of L1.

L1 is asymmetrically stretched to apply a curved shape. Stretching of plasticized PVB film is known to the person skilled in the art and stretching of layer L1 can be performed with the same technology and machinery.

In a first embodiment, layers L1 and L2 are combined into the interlayer film and simultaneously curved by asymmetric stretching.

In a second embodiment, layer L1 is adhered to a transfer film having a Tg of at least 5°C higher than L1; the resulting transfer composite is curved by asymmetric stretching; the transfer film is removed from the stretched transfer composite and wherein the resulting stretched layer L1 and L2 are combined into the interlayer film.

In these embodiments, Layer L1 with the curved shape is applied to the surface of Layer L2. The surface area of Layer L1 may be same or smaller than the surface area of Layer L2. In a variant of the invention, layer L1 is applied to the surface of Layer L2 before stretching and the combined layers L1 and L2 are then curved by asymmetric stretching.

In a third embodiment, the asymmetric stretching of L1 is performed by partially heating L1 and mechanically stretching the heated parts of L1 and wherein the resulting stretched layer L1 is combined with L2 into the interlayer film.

### Layer L1

Preferably, the amount of plasticiser in layer L1 prior to combination with L2 is less than 15 % by weight, more preferably less than 10 % by weight, more preferably less than 5 % by weight and most preferably less than 2 % by weight. Most preferred, L1 does not contain a plasticizer (0 wght%).

Hereinafter, the term "prior to combination" refers to the state of the layers L1 and L2 prior to having any contact to each other. For example, the term refers to the composition of each film separately formed and separately wound to individual rolls. The term "prior to combination" refers to the state of the layers or films before combining them either in the lamination process of the laminated glass or prior to building a stack from the layers used for lamination.

Layer L1 can be provided with different optical properties than L2 , especially a reduced transparency by printing, coating or bulk tinting. Dyes for this purpose are known to the person skilled in the art and may contain inorganic or organic pigments, which preferably not dissolve in the polymer matrix and thus resist migration from Layer L1 to L2.

Generally, all known pigments for coloration, obscuration, reflection, absorption can be used. In the case of black pigments, preferable carbon black, iron oxides, polyaniline, perylenes or spinel pigments are used. In the case of white pigments, the modifications of titanium dioxide, barium sulfate or other can be used. In case of blue and green, derivatives of phthalocyanines can be used. In case of red, quinacridones, diketopyrrolopyrrols are typical candidates as there are azo pigments for yellow. In addition, light diffusing, light guiding, heat absorbing or reflecting particles or fibers may be used. The pigments may be dispersed in a carrier fluid like water, alcohol or mixtures of alcohol and water. Furthermore, binders like polyvinyl alcohol, polyvinyl butyral, polyvinyl pyrrolidone, polyacrylates, polyurethanes or poly styrene-acrylate may be present. Such printing compositions are referred to as "printing inks" or simple "inks" hereinafter.

Water-based printing inks are preferred over printing inks based on organic solvents since they do not swell or dissolve the layer L1 and/or lead to film defects. Printing inks based on organic solvents can be used if the coating is thin and/or the drying step is fast such that the solvent does not migrate into the PVB film. It is beneficial to use a low molecular weight PVB as binder for the printing inks since it ensures good compatibility with the PVB containing film L2.

The printing inks can be applied via techniques that are commonly known in the printing industry such as inkjet printing, offset printing, rotogravure printing, flexography, and screenprinting, followed usually by a drying step.

Layer L1 is produced separately from Layer L2 (for example extruded or solvent cast) and has either no plasticiser at all or sufficiently small proportion of plasticiser so that subsequent functionalization and processing is not adversely influenced.

The thickness of Layer L1 in the starting state prior to combination with L2 is 10 - 250 µm, preferably 15 - 100 µm, preferably 20 - 50 µm.

### Layer L2

Layer L2 may be any plasticized PVB-film known in the art. It is further possible the layer L2 comprises two (or more) films having the same of a different composition.

L2 has in the starting state prior to combination with L1 at least 16% by weight or 22 % by weight, such as 22.0 - 45.0 % by weight, preferably 25.0 - 32.0 % by weight and in particular 26.0 - 30.0 % by weight plasticiser.

The thickness of Layer L2 in the starting state prior to combination with L1 is 450 - 2500 µm, preferably 600 - 1000 µm, preferably 700 - 900 µm.

### Polyvinyl Acetal

The layers L1 and L2 used in accordance with the invention contain a first and second polyvinyl acetal resin which can have the same or a different chemical composition, i.e. may have an identical or different chemical composition. Both are produced by acetalisation of polyvinyl alcohol or ethylene vinyl alcohol copolymer.

The first and second polyvinyl acetals may differ in a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the layers L1 and L2 may be identical or different, pure or a mixture of polyvinyl alcohols or ethylene vinyl alcohol copolymers with different degree of polymerisation or degree of hydrolysis.

The polyvinyl acetate content of the polyvinyl acetals in the layers L1 and L2 can be set by use of a polyvinyl alcohol or ethylene vinyl alcohol copolymer saponified to an appropriate degree. It is also possible to carry out the acetalisation of the polyvinyl alcohols or ethylene vinyl alcohol copolymers with a mixture of a number of aldehydes or keto compounds.

The layers L1 and L2 preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in layers L1 and L2 may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

Independent of each other the polyvinyl alcohol content of the polyvinyl acetals PB used in Layer L1 and/or L2 may be between 14 - 26 % by weight, 16 - 24 % by weight, 17 - 23 % by weight and preferably between 18 and 21 % by weight.

In a preferred embodiment of the invention, Layer L1 comprises a polyvinyl acetal PA with a proportion of vinyl alcohol groups from 6 to 26 % by weight and the Layer L2 comprises a polyvinyl acetal B with a proportion of vinyl alcohol groups from 14 to 26 % by weight.

The layers L1 and L2 contain uncross-linked polyvinyl acetal, but the use of cross-linked polyvinyl acetals is also possible. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 03/020776 A1 (polyvinyl acetal cross-linked with glyoxylic acid).

### Plasticizer

Layers L2 and optionally layer L1 used in accordance with the invention may contain identical or different plasticisers. Preferable, one or more plasticizers selected from the following groups are used:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Layer L2 may consist of at least two sub-films B' and B", which have a different plasticiser content.

In addition, layers L1 and L2 may contain further additives, such as alkaline or alkaline earth metal salts residual quantities of water, UV absorber, antioxidants, adhesion regulators, optical brighteners or fluorescent additives, stabilisers, colorants, processing aids, inorganic or organic nanoparticles, pyrogenic silicic acid and/or surface-active substances.

It is further possible that the final interlayer film is provided with a curved shape parallel to the shape of the L1 after asymmetric stretching.

Generally, Layer L2 is combined with Layer L1 and optionally any other films in the preferred orientation and subsequently, the windshields are produced by a lamination process known in the art. Examples of the lamination process as well as the techniques to apply the areas with reduced transparency to layer L2 are also known in the art and can be found inter alia in WO 2019/121535 and WO 2019/038043.

### Examples

### Example 1.

### L2: commercially available acoustic tri-layer PVB from Kuraray: Trosifol^{®} V220 0.84 mm

L1: a 1500 m long x 35 cm wide roll of 25 µm thin PVB layer (clear) on 75 µm PET carrier film was printed via gravure printing with a continuous black obscuration band on its left side. The obscuration band was 25 cm wide including a dot matrix portion of 2.5 cm with decreasing dot size towards clear portion. The thin PVB layer did not contain plasticizer, its polyvinyl butyral resin having a residual vinyl acetate content of 0.5 w-% and 19 w-% of vinyl alcohol. When laminating the thin PVB layer together with a regular clear auto grade PVB from Kuraray (Trosifol^{®} V200) between 2 plies of clear glass (Planiclear^{®}), the visible light transmission TL gave the following results:
area with clear thin PVB layer = 89%
area with opaque black print = 0%
area of dot matrix = 37% (result depends on the precise position since a combination of clear and opaque dots is present in the optical path)

The glass transition temperature Tg of the clear thin PVB layer was measured by DSC (2nd heat-up ramp) to be 73°C.

The PET carrier film was stripped off from the partially printed PVB layer and the layer was stretched / curved on a SFM shaper from Ayrox avoiding contact of the print layer to rollers. Surface temperature (short time exposure) was set to 105 °C. Curvature of film was such that the solid printed area was on the more elongated side and the dot matrix on the less elongated side.

The curved printed thin PVB layer was positioned at the bottom part of a pair of windshield glass together with a regular acoustic tri-layer PVB from Kuraray (Trosifol^{®} V220). After vacuum de-airing in a rubber bag at 95 °C max during 25 min, the prelaminated assembly was subject to autoclave treatment at 140 °C max and 12 bar max for a total time of 90 minutes.

The finished windshield had the black opaque zone at its bottom part (motor edge) with high opacity wherein the upper edge with the dot matrix showed a matching curvature to the bottom edge of the windshield.

### Example 2.

### L2: commercially available acoustic tri-layer PVB from Kuraray: Trosifol^{®} V220 0.84 mm

L1: a 1500 m long x 35 cm wide roll of 25 µm thin PVB layer on 75 µm PET carrier was produced via solvent co-casting by a combination of a first clear casting solution and a second casting solution containing a combination of pigments to produce a neutral grey. The grey portion of the cast thin PVB layer was 20 cm wide and had a fade out length to transparent of 5 cm. The thin PVB layer did not contain plasticizer, its polyvinyl butyral resin having a residual vinyl acetate content of 0.5 w-% and 19 w-% of vinyl alcohol. When laminating the thin PVB layer together with a regular clear auto grade PVB from Kuraray (Trosifol^{®} V200) between 2 plies of clear glass (Planiclear^{®}), the visible light transmission TL gave the following results:
area with clear thin PVB layer = 89%
area with solid grey tint = 10%
grey area fade out = 15 - 75% (result depends on the precise position in the optical path)

The glass transition temperature Tg of the clear thin PVB layer was measured by DSC (2nd heat-up ramp) to be 73°C.

The PET carrier film was stripped off from the partially tinted PVB layer and the layer was stretched / curved on a SFM shaper from Ayrox avoiding contact of the print layer to rollers. Surface temperature (short time exposure) was set to 105 °C. Curvature of film was such that the solid printed area was on the more elongated side and the dot matrix on the less elongated side.

The curved clear/grey tinted PVB layer was positioned at the top part of a pair of windshield glass together with a regular acoustic tri-layer PVB from Kuraray (Trosifol^{®} V220). After vacuum de-airing in a rubber bag at 95 °C max during 25 min, the prelaminated assembly was subject to autoclave treatment at 140 °C max and 12 bar max for a total time of 90 minutes.

The finished windshield had the grey tinted shade band including the fade out towards clear at its top part (roof edge) with a matching curvature to the roof edge of the windshield.

## Claims

1. Process to manufacture an interlayer film wherein the interlayer film comprises at least one layer L1 comprising a first polyvinyl acetal resin and less than 15 wght% of a first plasticizer and at least one layer L2 comprising a mixture of a second polyvinyl acetal resin and more than 16 wght% of a second plasticizer **characterized in that** layer L1 is curved by asymmetric stretching and layer L1 and L2 are combined into the interlayer film and wherein Layer L1 has different optical properties than layer L2.

2. Process according to claim 1 **characterized in that** layer L1 is provided at least in part with different optical properties than layer L2, wherein the optical properties are selected from the group consisting of optical density, visible light transmission, UV transmission, NIR transmission, color values, visual color impression and surface gloss.

3. Process according to claim 2 **characterized in that** layer L1 is provided with different optical properties by adding organic dyes, inorganic pigments, UV absorbers, NIR absorbers.

4. Process according to claim 2 or 3 **characterized in that** layer L1 is provided with different optical properties by embossing, printing, hot stamping or coating of at least one surface of L1.

5. Process according to any of claims 1 to 4 **characterized in that** layer L1 and L2 are combined into the interlayer film and simultaneously curved by asymmetric stretching.

6. Process according to any of claims 1 to 5 **characterized in that** layer L1 is adhered to a transfer film having a Tg of at least 5°C higher than L1; the resulting transfer composite is curved by asymmetric stretching; the transfer film is removed from the stretched transfer composite and wherein the resulting stretched layer L1 and L2 are combined into the interlayer film.

7. Process according to any of claims 1 to 5 **characterized in that** the asymmetric stretching of L1 is performed by partially heating L1 and mechanically stretching the heated parts of L1 and wherein the resulting stretched layer L1 is combined with L2 into the interlayer film.

8. Process according to any of claims 1 to 7 **characterized in that** interlayer film is provided with a curved shape parallel to the shape of the L1 after asymmetric stretching.

9. Process according to any of claims 1 to 8 **characterized in that** layer L1 comprises less that 5wght% of a first plasticizer.

10. Process according to any of claims 1 to 9 **characterized in that** the first and second plasticizer are chemically identical.

11. Process according to any of claims 1 to 10 **characterized in that** the first and second polyvinyl acetal resins are chemically identical.

12. Process according to any of claims 1 to 11 **characterized in that** the first and second polyvinyl acetal resins are chemically different.
